# EUROPÄISCHE PATENTSCHRIFT

(11) **EP 1 269 237 B1**
(45) Veröffentlichungstag und Bekanntmachung des Hinweises auf die Patenterteilung: **30.03.2005**
(21) Anmeldenummer: 01953028.6
(22) Anmeldetag: 24.01.2001
(51) Int. Cl.: G02B 6/38, G02B 6/255

(54) **OPTISCHE LICHWELLENLEITER-ÜBERTRAGUNGSSTRECKE MIT PASSIVER RICHTUNGSABHÄNGIGER DÄMPFUNG**
OPTICAL WAVE GUIDE TRANSMISSION PATH WITH PASSIVE DIRECTION-DEPENDENT ATTENUATION
PARCOURS DE TRANSMISSION DE GUIDE D'ONDES OPTIQUES A ATTENUATION PASSIVE FONCTION DU SENS

(30) Priorität: 18.02.2000 DE 10007379
(43) Veröffentlichungstag der Anmeldung: 02.01.2003
(73) Patentinhaber: Deutsche Telekom AG, 53113 Bonn (DE)
(72) Erfinder: DULTZ, Wolfgang, 65396 Frankfurt am Main (DE); MAIER, Volker, 63165 Mühlheim (DE); HAPP, Jörg, 36137 Grossenlüder (DE); FRANK, Werner, 91807 Solnhofen (DE)
(86) Internationale Anmeldenummer: PCT/EP2001/000765
(87) Internationale Veröffentlichungsnummer: WO 2001/061398

(56) Entgegenhaltungen:
- EP-A- 0 361 498
- EP-A- 0 770 890
- EP-A- 1 039 321
- US-A- 5 416 862
- IMAI H: "APPLICATIONS OF PERFLUORINATED POLYMER FIBERS TO OPTICAL TRANSMISSION" PROCEEDINGS OF SEVENTH INTERNATIONAL PLASTICS OPTICAL FIBER,XX,XX, 22. September 1997 (1997-09-22), Seiten 29-30, XP000863521
- PATENT ABSTRACTS OF JAPAN vol. 006, no. 038 (P-105), 9. März 1982 (1982-03-09) & JP 56 156809 A (NIPPON TELEGR & TELEPH CORP), 3. Dezember 1981 (1981-12-03)

## Beschreibung

Die Erfindung betrifft eine optische Informations-Übertragungsstrecke nach dem Oberbegriff des Anspruchs 1 sowie ein Verfahren zu deren Herstellung.

Im Vergleich zu Kupferkabeln bieten Lichtwellenleiter eine nahezu unbegrenzte Bandbreite für die Informationsübertragung. Mit ausgefeilten Techniken, beispielsweise dem Wellenlängenmultiplex-Verfahren werden derartige Wellenleitern mit immer höheren Übertragungsraten verwendet. Im Weitverkehrsbereich werden für die Übertragungswege heutiger moderner Telekommunikationsnetze deshalb fast ausschließlich Glasfaserkabel eingesetzt. Ein weiterer Vorteil der Glasfaserkabel-Übertragungsstrecken liegt in der um ein Vielfaches höheren Verstärkerabstände im Vergleich zu den notwendigen Repeaterabständen bei Kupferkabeln.

Zur Erhöhung der Kapazität von Multimode-Faser-Systemen ist aus US 5,416,862 ein Verfahren bekannt, bei dem Monomode-Fasern an Multimode-Fasern unter einem bestimmten Winkel gekoppelt werden, um selektiv höhere Moden in einer Multimode-Faser propagieren zu lassen. In EP 0 361 498 A2 wird eine Kopplung von Multimode- und Monomode-Fasern beschrieben, bei welcher die optischen Achsen der Fasern nicht zusammenfallen, wodurch ähnlich wie in US 5,416,862 niedrige Moden in der Multimode-Faser unterdrückt werden.

Langfristig wird auf dem Gebiet der Telekommunikation daran gedacht, ein durchgängiges Glasfasernetz bis in unmittelbare Kundennähe aufzubauen. Je nach Verfahren werden dabei die Signale in Verteil- und Rückrichtung entweder über denselben Lichtwellenleiter oder über getrennte Fasern geführt. Insbesondere beim Aufbau des Rückkanals ist zu berücksichtigen, dass ein privates Inhouse-Netz erhebliche Störungen im offenen Telekommunikationsnetz verursachen kann. Dies kann beispielsweise durch ein geringes Abschirmmaß der Inhouse-Verkabelung oder durch eine nicht vorschriftsmäßige Installation verursacht werden.

Wird der Anschluss des Endteilnehmers über zwei Fasern realisiert, muss für die dem Verteil-Kanal zugeordnete Faser im wesentlichen ausgeschlossen werden, dass vom Endteilnehmer in die Faser eingespeistes Licht in der Faser geführt wird.

Um die Lichtleitung in einer Richtung zu verhindern oder zumindest stark abzuschwächen, werden nach dem Stand der Technik häufig aufwendige Komponenten, z.B. Faraday-Isolatoren verwendet, was den Aufbau der Signalstrecke erheblich verteuert.

Der Erfindung liegt somit die Aufgabe zugrunde, eine Informations-Übertragungsstrecke auf der Basis von Lichtwellenleitern bereitzustellen, welche ohne aktive Komponenten eine zuverlässige Unterdrückung der Leitung von Lichtsignalen in eine vorbestimmte Richtung aufweist.

Dieses technische Problem löst die Erfindung mit einer optischen Informations-Übertragungsstrecke mit den Merkmalen des Anspruchs 1 bzw. einem Verfahren zu deren Herstellung nach Anspruch 6.

Auf höchst überraschend einfache Weise erreicht die Erfindung durch das Koppeln von zwei Lichtfasern mit stark unterschiedlichen Durchmessern eine Dämpfung des in eine vorgegebene Richtung geführten Lichtes um mindestens einen Faktor 30, während die Abschwächung des Lichtes, welches sich in die umgekehrte Richtung fortpflanzt, dagegen sehr gering ist.

Die Dämpfung in die vorbestimmte Richtung ist ungefähr gleich dem Verhältnis der Querschnittsflächen der lichtleitenden Kerne der beiden Fasern, für die angestrebte Dämpfung ist somit ein Kerndurchmesserverhältnis von 6 ausreichend. Die Realisierung dieser "Einwegkopplung" macht den Einsatz von teuren, aktiven Komponenten überflüssig. Zur Erzielung des gewünschten Effektes ist im angesprochenen Beispiel der Lichtwellenleiter mit dem größerem Durchmesser auf der Endteilnehmerseite anzuordnen.

Die Zusammenführung der beiden Lichtfasern mit stark unterschiedlichem Durchmesser ist relativ unkritisch im Hinblick auf die Justage durchführbar. Insbesondere verringert eine nicht axiale Ausrichtung der Stirnflächen der beiden Fasern die Einkopplung des Lichtes von der Faser mit geringem Durchmesser zur Faser mit großem Durchmesser kaum, was die Herstellung der erfindungsgemäßen optischen Informations-Übertragungsstrecke stark vereinfacht, gleichzeitig jedoch die Dämpfung der Lichtleitung in die entgegengesetzte Richtung kaum beeinflusst. Es ist dem Fachmann jedoch verständlich, dass die beste Ankopplung bei einer axialen und zentrischen Ausrichtung der Fasern erreichbar ist.

Weiterhin bietet die erfindungsgemäße Informationsübertragungsstrecke für den Endteilnehmer den Vorteil, dass der Anschluss eines weiteren optischen Wellenleiters an die Informationsübertragungstrecke einfach und billig ausgeführt werden kann. Der verhältnismäßig große Durchmesser des Lichtwellenleiters auf der Seite des Endteilnehmers ermöglicht die unkompliziert durchzuführende Ankopplung an einen weiteren Lichtwellenleiter mit gleichem Durchmesser, beispielsweise zur Inhouse-Verkabelung. Eine aufwendige Justage beim Zusammenführen der beiden Lichtwellenleitern mit verhältnismäßig großem Durchmesser, insbesondere im Vergleich zum Durchmesser einer Monomode-Glasfaser, ist nicht notwendig.

Eine Nachrichtenübermittlung mittels der erfindungsgemäßen optischen Informations-Übertragungsstrecke ist im Hinblick auf die Bereitstellungskosten besonders vorteilhaft, wenn die zweite Faser eine Multimode-Faser, insbesondere eine Kunststoff-Multimode-Faser ist. Derartige Fasern können schon heute zumindest als Labormuster für den spektralen Bereich des zweiten (um 1300 nm) und des dritten (um 1500 nm) optischen Fensters von Glasfasern betrieben werden. Demnach eignen sich diese modernen Kunststoff-Fasern hervorragend als zweiter Wellenleiter für die erfindungsgemäße Informationsübertragungsstrecke, wenn die erste Faser eine dünne Glasfaser, insbesondere eine Monomode-Glasfaser ist, da auch die modernen Kunststoff-Fasern zukünftig in den Standard-Spektralbereichen von üblichen Glasfasern betrieben werden können.

Der relativ großer Durchmesser, beispielsweise von etwa 1 mm, erlaubt einfache Spleiße durch Verkleben der Faser ohne die aufwendige Justage und Verschmelzung, wie sie bei einmodigen Glasfasern nötig ist. Ihr im Verhältnis zum optischen Durchmesser von Monomode-Glasfasern sehr großer Durchmesser ermöglicht eine Dämpfung des vom Endteilnehmer in das öffentliche Telekommunikationsnetz, oder in jedes andere beliebige Netzes eingespeiste Licht um den Faktor 100 oder mehr.

Aufgrund der unterschiedlichen Materialien der zu koppelnden Lichtfasern der erfindungsgemäßen optischen Informations-Übertragungsstrecke vereinfacht sich auch die Gestaltung des Übergangs der beiden Fasern im Vergleich zum Übergang von zwei Glasfasern. Einerseits können beide Fasern mit ihren Stirnflächen einfach miteinander verbunden, beispielsweise verklebt werden. Wie erwähnt, muss aufgrund der sehr unterschiedlichen optischen Durchmesser nicht sehr viel Sorgfalt auf die relative Ausrichtung der beiden Fasern aufgewendet werden. Eine azentrische Kopplung bzw. eine Verkippung der beiden Stirnflächen der Fasern zueinander hat nur geringe negativen Auswirkungen auf die Kopplung des Lichtes von der Glasfaser zur Kunststoff-Faser.

Zur Verminderung von Reflexionslicht in die Faser mit geringem Kerndurchmesser kann auf der Stirnfläche der Multimode-Faser ein Antireflex-Coating aufgebracht sein.

Durch das Zusammenfügen der beiden Fasern mit unterschiedlichen Kerndurchmessern kann Licht u.U. aus der Faser mit größerem Durchmesser an der Stirnfläche austreten und wieder in diese zurückreflektiert werden, da sich die Stirnflächen beider Fasern nicht vollständig überdecken. Auf überraschend einfache Weise kann dieser Nachteil dadurch behoben werden, dass an den Fasern im Bereich der Kopplung ein Übergangsflansch befestigt wird, der als Lichtfalle ausgebildet ist und somit sowohl eine Halte- als auch eine Abschattungsfunktion erfüllt.

Besonders vorteilhaft ist es, wenn sich die Glasfaser am Übergang in die Stirnfläche der Kunststoff-Faser hinein erstreckt. Bei dieser Anordnung sind keine externen Halterungen bzw. ist keine Verklebung notwendig. Der Übergang kann erfindungsgemäß allein dadurch erreicht werden, dass entweder eine Faser oder beide erhitzt und relativ aufeinander zu bewegt werden, bis sich die Glasfaser in die Kunststoff-Faser hinein erstreckt. Dabei ist es sowohl möglich, dass die Glasfaser in die Kunststoff-Faser hineingedrückt wird oder umgekehrt, die Kunststoff-Faser in Richtung zur Glasfaser bewegt wird. Eine beiderseitige Erhitzung der Fasern im Bereich ihrer Stirnflächen bzw. dem benachbarten Körper der beiden Fasern hat den Vorteil, dass sich eine innige Verbindung zwischen der Kunststoff-Faser und der Glasfaser im Bereich der Kontaktflächen aufbauen kann.

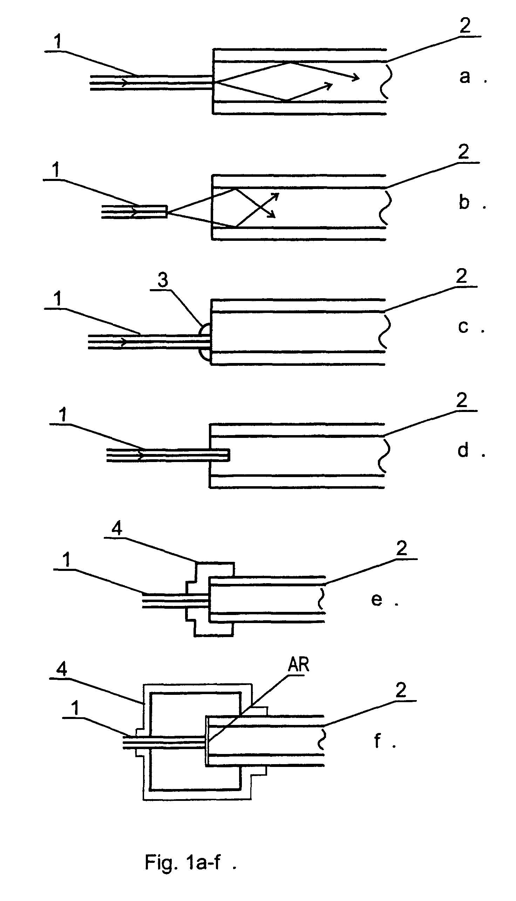

Die Erfindung wird im Folgenden durch das Beschreiben einiger Ausführungsformen unter Bezugnahme auf die beiliegende Zeichnung beschrieben, wobei die Figuren 1 a,b und d.f für verschiedene Ausführungsformen der erfindungsgemäßen optischen Informations-Übertragungsstrecke den Übergangsbereich von einer Monomode-Glasfaser und einer Multimode-Kunststoff-Faser zeigt.

In der in Fig. 1a gezeigten Ausführungsform der erfindungsgemäßen optischen Informations-Übertragungsstrecke ist das eine Ende einer Monomode-Glasfaser 1 mittels einer nicht dargestellten Halterung zentrisch und axial zu einer Multimode-Kunststoff-Faser 2 gehalten, wobei sich die Stirnflächen beider Fasern berühren. Licht aus der Glasfaser 1 kann somit in die Kunststoff-Faser 2 eintreten und wird von dieser weitergeleitet, während Licht aus der Kunststoff-Faser nur zu einem sehr geringen Teil in die Glasfaser eintreten kann.

In der in Fig. lb gezeigten Ausführungsform ist das eine Ende einer Monomode-Glasfaser 1 axial und zentrisch zu einer Multimode-Kunststoff-Faser 2 beabstandet gehalten. Dabei ist darauf zu achten, dass der Modenfelddurchmesser der Einmoden-Faser 1 am Ort der Stirnfläche der Kunststoff-Faser 2 kleiner oder gleich dem Kerndurchmesser der Kunststoff-Faser 2 ist. In einer anderen Ausführungsform der erfindungsgemäßen optischen Informations-Übertragungsstrecke ist eine Glasfaser 1 an eine Kunststoff-Faser 2 mit einem Klebers 3 angeklebt, wobei die Stirnfläche der beiden Fasern in Kontakt stehen, siehe Fig. 1c. Im gezeigten, nicht erfindungsgemäßen Beispiel stehen beide Fasern in einem azentrischen Kontakt.

Im in Fig. ld dargestellten Ausschnitt einer anderen Ausführungsform der erfindungsgemäßen optischen Informations-Übertragungsstrecke erstreckt sich eine Monomode-Glasfaser in die Multimode-Kunststoff-Faser hinein. Der Übergang wird dadurch hergestellt, dass sowohl die Glasfaser als auch die Kunststoff-Faser im Bereich ihrer Stirnflächen erhitzt werden. In einer entsprechenden Vorrichtung wird unter Beibehaltung der Energiezufuhr die Glasfaser axial ausgerichtet in die Kunststoff-Faser hineingedrückt. Nach dem Abkühlen der Kopplungsstelle sind beide Fasern fest miteinander verbunden.

Eine haltbare Verbindung zwischen beiden Fasern kann auch mit Hilfe eines in Fig. le dargestellten Übergangsflansches 4 erreicht werden.

Dieser Flansch 4 kann, wie in Fig. 1f gezeigt, auch als Lichtfalle ausgebildet sein, um zu verhindern, dass das Licht, welches aus der Kunststoff-Faser kommt, in diese zurück reflektiert wird. Hierzu sind die zur Stirnfläche der Faser gerichteten Teile des Flansches geschwärzt. Weiterhin ist bei dieser Ausführungsform der Erfindung auf der Stirnfläche der Multimoden-Kunststoff-Faser ein aus mehreren Schichten bestehendes Antireflex-Coating aufgebracht, um die an der Stirnfläche in die Kunststoff-Faser rückreflektierten Lichtanteile zu vermindern.

## Patentansprüche

1. Optische Informationsübertragungsstrecke, welche ohne aktive Komponenten eine zuverlässige Unterdrückung der Leitung von Lichtsignalen in eine vorbestimmte Richtung aufweist, mit zumindest einer ersten und einer zweiten Lichtfaser (1, 2), wobei die Lichtfasern an einem Übergang starr aneinander gekoppelt sind, **dadurch gekennzeichnet, dass** der Kerndurchmesser der zweiten Faser mindestens sechsmal größer ist als der Kerndurchmesser der ersten Faser, und dass die zweite Faser im wesentlichen axial und zentriert zu der ersten Faser ausgerichtet ist.

2. Optische Informationsübertragungsstrecke nach Anspruch 1, **dadurch gekennzeichnet, dass** die erste Faser (1) eine Glasfaser, insbesondere eine Monomode-Glasfaser und die zweite Faser (2) eine Multimode-Faser, insbesondere eine Kunststoff-Multimode-Faser ist.

3. Optische Informationsübertragungsstrecke nach Anspruch 2, wobei die zweite Faser (2) eine Kunststoff-Faser ist, **dadurch gekennzeichnet, dass** sich die Glasfaser (1) mit ihrer Stirnfläche in die Kunststoff-Faser (2) hinein erstreckt.

4. Optische Informationsübertragungsstrecke nach Anspruch 1, 2 oder 3, **dadurch gekennzeichnet, dass** beide Fasern (1, 2) am Übergang mit ihren Stirnflächen miteinander verbunden und verklebt sind.

5. Optische Informationsübertragungsstrecke nach Anspruch 2, 3 oder 4, **dadurch gekennzeichnet, dass** beide Fasern am Übergang zueinander ausgerichtet durch einen Flansch gehalten sind und der Flansch (4) als Lichtfalle ausgebildet ist, wobei die Stirnfläche der Faser mit größerem Kerndurchmesser ein Antireflex-Coating aufweist.

6. Verfahren zum Herstellen einer optischen Informationsübertragungsstrecke nach einem der Ansprüche 1 bis 4, **dadurch gekennzeichnet, dass** die Lichtfasern (1, 2) mit zumindest sechsfach unterschiedlichem Kerndurchmesser starr aneinander gekoppelt werden, und dass die zweite Faser in wesentlichen axial und zentriert zu der erster Faser ausgerichtet wird.

7. Verfahren nach Anspruch 6, **dadurch gekennzeichnet, dass** die Stirnflächen der Lichtfasern in Kontakt gebracht und miteinander verklebt werden.

8. Verfahren nach Anspruch 6, **dadurch gekennzeichnet, dass** die beiden Stirnflächen beabstandet gehalten werden, wobei im Zwischenraum ein brechungsindexangepasstes Medium angeordnet wird.

9. Verfahren nach Anspruch 6, wobei die erste Faser (1) eine Glasfaser, insbesondere eine Monomode-Glasfaser und die zweite Faser (2) eine Kunststoff-Multimode-Faser ist,
**dadurch gekennzeichnet, dass**
die Kunststoff-Faser im Bereich ihrer Stirnfläche erhitzt und die Glasfaser mit ihrer Stirnfläche in die Stirnfläche der Kunststoff-Faser hineingedrückt wird.

10. Verfahren nach Anspruch 6, wobei die erste Faser (1) eine Glasfaser, insbesondere eine Monomode-Glasfaser und die zweite Faser (2) eine Kunststoff-Multimode-Faser ist,
**dadurch gekennzeichnet, dass**
die Glasfaser im Bereich ihrer Stirnfläche erhitzt und mit ihrer Stirnfläche in die Stirnfläche der Kunststoff-Faser hineingedrückt wird.

11. Verfahren nach Anspruch 9 und 10, **dadurch gekennzeichnet, dass** beide Fasern erhitzt werden.

## Claims

1. Optical information transmission link having, without active components, a reliable suppression of the line from light signals in a predetermined direction, with at least one first and one second optical fibre (1, 2), the optical fibres being rigidly coupled together at a transition, **characterized in that** the core diameter of the second fibre is at least six times greater than the core diameter of the first fibre, and **in that** the second fibre is in the main axially and centrally aligned with respect to the first fibre.

2. Optical information transmission link according to claim 1, **characterized in that** the first fibre (1) is a glass fibre, more particularly a monomode glass fibre, and the second fibre (2) is a multimode fibre, more particularly a plastic multimode fibre.

3. Optical information transmission link according to claim 2, the second fibre (2) being a plastic fibre, **characterized in that** the glass fibre (1) extends with its end face into the plastic fibre (2).

4. Optical information transmission link according to claim 1, 2 or 3, **characterized in that** both fibres (1, 2) are joined and bonded together at the transition with their end faces.

5. Optical information transmission link according to claim 2, 3 or 4, **characterized in that** both fibres, aligned with respect to each other, are supported at the transition by a flange and the flange (4) is in the form of a light trap, the end face of the fibre with the larger core diameter having an antireflective coating.

6. Method for producing an optical information transmission link according to any one of claims 1 to 4, **characterized in that** the optical fibres (1, 2) with at least a six-fold difference in core diameter are rigidly coupled together, and **in that** the second fibre is in the main axially and centrally aligned with respect to the first fibre.

7. Method according to claim 6, **characterized in that** the end faces of the optical fibres are brought into contact and bonded together.

8. Method according to claim 6, **characterized in that** the two end faces are held at a distance from each other, a refractive-index-adapted medium being disposed in the intermediate space.

9. Method according to claim 6, the first fibre (1) being a glass fibre, more particularly a monomode glass fibre, and the second fibre (2) being a plastic multimode fibre, **characterized in that** the plastic fibre is heated in the region of its end face and the glass fibre is pressed with its end face into the end face of the plastic fibre.

10. Method according to claim 6, the first fibre (1) being a glass fibre, more particularly a monomode glass fibre, and the second fibre (2) being a plastic multimode fibre, **characterized in that** the glass fibre is heated in the region of its end face and is pressed with its end face into the end face of the plastic fibre.

11. Method according to claims 9 and 10, **characterized in that** both fibres are heated.

## Revendications

1. Liaison optique de transmission d'informations qui, sans composants actifs, présente une inhibition fiable de la conduite de signaux lumineux dans une direction prédéfinie, avec au moins une première et une deuxième fibre lumineuse (1, 2), les fibres lumineuses étant couplées l'une à l'autre de manière rigide à une jonction, **caractérisée en ce que** le diamètre du coeur de la deuxième fibre est au moins six fois plus grand que le diamètre du coeur de la première fibre et que la deuxième fibre est disposée essentiellement de manière axiale et centrée par rapport à la première fibre.

2. Liaison optique de transmission d'informations selon la revendication 1, **caractérisée en ce que** la première fibre (1) est une fibre de verre, notamment une fibre de verre monomode, et la deuxième fibre (2) est une fibre multimode, notamment une fibre multimode synthétique.

3. Liaison optique de transmission d'informations selon la revendication 2, la deuxième fibre (2) étant une fibre synthétique, **caractérisée en ce que** la fibre de verre (1) s'étend avec sa face frontale dans la fibre synthétique (2).

4. Liaison optique de transmission d'informations selon les revendications 1, 2, ou 3, **caractérisée en ce que** les deux fibres (1, 2) sont reliées et collées l'une à l'autre par leur face frontale à la jonction.

5. Liaison optique de transmission d'informations selon les revendications 2, 3 ou 4, **caractérisée en ce que** les deux fibres sont alignées à la jonction l'une sur l'autre par une bride et que la bride (4) est construite comme piège de lumière, la face frontale de la fibre au diamètre de coeur plus élevé présentant une couche anti-reflets.

6. Procédé pour l'établissement d'une liaison optique de transmission d'informations selon l'une des revendications 1 à 4, **caractérisé en ce que** les fibres lumineuses (1,2) sont couplées l'une à l'autre de manière rigide avec un diamètre du coeur au moins six fois différent et que la deuxième fibre est disposée essentiellement de manière axiale et centrée par rapport à la première fibre.

7. Procédé selon la revendication 6, **caractérisé en ce que** les faces frontales des fibres lumineuses sont mises en contact et collées les unes aux autres.

8. Procédé selon la revendication 6, **caractérisé en ce que** les deux faces frontales sont espacées, un moyen adapté à l'indice de réfraction étant disposé dans l'écartement.

9. Procédé selon la revendication 6, la première fibre (1) étant une fibre de verre, notamment une fibre de verre monomode, et la deuxième fibre (2) une fibre multimode synthétique,
**caractérisé en ce que**
la fibre synthétique est échauffée dans la zone de sa face frontale et la fibre de verre enfoncée avec sa face frontale dans la face frontale de la fibre synthétique.

10. Procédé selon la revendication 6, la première fibre (1) étant une fibre de verre, notamment une fibre de verre monomode, et la deuxième fibre (2) une fibre multimode synthétique,
**caractérisé en ce que**
la fibre de verre est échauffée dans la zone de sa face frontale et enfoncée avec sa face frontale dans la face frontale de la fibre synthétique.

11. Procédé selon les revendications 9 et 10, **caractérisé en ce que** les deux fibres sont échauffées.
